# EUROPÄISCHE PATENTSCHRIFT

(11) **EP 2 371 480 B1**
(45) Veröffentlichungstag und Bekanntmachung des Hinweises auf die Patenterteilung: **26.09.2012**
(21) Anmeldenummer: 11153248.7
(22) Anmeldetag: 03.02.2011
(51) Int. Cl.: B23Q 1/01, B23Q 7/05, B23Q 39/02

(54) **Profilbearbeitungszentrum**
Profile processing centre
Centre de traitement de profilés

(30) Priorität: 31.03.2010 DE 102010014376
(43) Veröffentlichungstag der Anmeldung: 05.10.2011
(73) Patentinhaber: elumatec GmbH, 75417 Mühlacker (DE)
(72) Erfinder: Lutz, Eugen, 75417 Mühlacker (DE); Hettler, Andreas, 75417 Mühlacker (DE)
(74) Vertreter: Patentanwälte Ruff, Wilhelm, Beier, Dauster & Partner

(56) Entgegenhaltungen:
- EP-A1- 2 070 649
- US-A- 4 693 761

## Beschreibung

Die Erfindung betrifft ein Profilbearbeitungszentrum mit einer Drehkranzeinheit mit mehreren Bearbeitungswerkzeugen und wenigstens einer Spanneinrichtung zum Spannen von Profilen.

Aus der europäischen Patentschrift EP 2 070 649 B1 ist ein Profilbearbeitungszentrum mit einer Drehkranzeinheit mit mehreren Bearbeitungswerkzeugen bekannt. Während der Bearbeitung muss ein Profil selbstverständlich mit einer Spanneinrichtung festgehalten werden.

Drehkranzeinheiten ermöglichen zahlreiche unterschiedliche Bearbeitungsvorgänge an einer einzigen Bearbeitungsstation. Die Flexibilität solcher Drehkranzeinheiten wird bei der Profilbearbeitung oft dadurch geschmälert, dass die Profile nicht in jeder beliebigen Lage eingespannt werden können, sondern entweder eine bestimmte Lage einnehmen müssen, in der sie ohne Gefahr von Beschädigungen fest eingespannt werden können oder die Spanneinrichtungen speziell ausgebildet werden müssen, um ein Profil so festzuhalten, dass es einerseits festgehalten wird und andererseits durch die Spannkräfte nicht beschädigt werden kann. Solche spezielle Spanneinrichtungen können beispielsweise speziell gefertigte Formstücke für bestimmte Profile aufweisen. Beson ders kritisch bei der Bearbeitung sind lackierte oder beschichtete Profile oder auch Profile, die frei abragende und gegen Biegung empfindliche Schenkel aufweisen.

Mit der Erfindung soll ein Profilbearbeitungszentrum mit einer Drehkranzeinheit verbessert werden.

Erfindungsgemäß ist hierzu ein Profilbearbeitungszentrum mit einer Drehkranzeinheit mit mehreren Bearbeitungswerkzeugen und wenigstens einer Spanneinrichtung zum Spannen von Profilen vorgesehen, wobei ein zu bearbeitendes Profil zur Bearbeitung innerhalb des Drehkranzes angeordnet und mittels der Spanneinrichtung fixiert wird, wobei die Spanneinrichtung wenigstens eine Auflagerolle mit horizontal angeordneter, relativ zum Maschinenrahmen unbeweglicher Drehachse aufweist, bei dem die Spanneinrichtung wenigstens eine erste Spannrolle mit horizontal angeordneter Drehachse und wenigstens eine zweite Spannrolle mit vertikal angeordneter Drehachse aufweist, wobei die erste Spannrolle relativ zum Maschinenrahmen sowohl in horizontaler als auch in vertikaler Richtung verschiebbar ist und die zweite Spannrolle relativ zum Maschinenrahmen wenigstens in horizontaler Richtung verschiebbar ist und wobei die Spanneinrichtung eine Steuereinheit aufweist, um die erste und/oder die zweite Spannrolle wahlweise in eine vordefinierte Sollposition zu verfahren und/oder mittels der ersten und/oder zweiten Spannrolle eine vordefinierte Sollspannkraft auf ein zu bearbeitendes Profil aufzubringen.

Durch die erfindungsgemäße Ausbildung des Profilbearbeitungszentrums wird es möglich, ein zu bearbeitendes Profil im Wesentlichen in beliebiger Lage und ohne Gefahr von Beschädigungen festzuhalten. Empfindliche Teile von Profilen, beispielsweise frei abragende Schenkel, können mittels der ersten oder der zweiten Spannrolle so gehalten werden, dass die erste und/oder die zweite Spannrolle in eine vordefinierte Sollposition verfahren wird und infolgedessen einen Anschlag für das Profil bildet, ohne eine zu große Spannkraft aufzubringen, die möglicherweise Beschädigungen des Profils hervorrufen könnte. Gleichzeitig kann die jeweils andere Spannrolle oder auch weitere Spannrollen gegen unempfindliche Abschnitte des Profils mit einer vordefinierten Sollspannkraft bewegt werden, um das Profil für die Bearbeitung sicher zu halten. Selbstverständlich ist es auch möglich, in einem ersten Schritt die Spannrollen in eine vordefinierte Sollposition zu verfahren, um das Profil zunächst einmal in seiner Lage zu fixieren. In einem zweiten Schritt kann dann das Spannen erfolgen, indem eine vordefinierte Sollspannkraft aufgebracht wird. Indem die erste Spannrolle relativ zum Maschinenrahmen sowohl in horizontaler als auch in vertikaler Richtung verschiebbar ist und die zweite Spannrolle relativ zum Maschinenrahmen wenigstens in horizontaler Richtung verschiebbar ist, können auch unterschiedlichste Profile für die Bearbeitung sicher gehalten werden. Mit dem erfindungsgemäßen Profilbearbeitungszentrum wird es dadurch möglich, unterschiedlichste Profile in im Wesentlichen beliebiger Lage auf den Auflagerollen sicher festzuhalten und dadurch die Flexibilität der Drehkranzeinheit voll auszunutzen.

In Weiterbildung der Erfindung definieren die Auflagerollen eine Auflageebene unterhalb einer Drehachse des Drehkranzes.

Auf diese Weise können auch große Profile problemlos bearbeitet werden und der konstruktiv bei einem Drehkranz begrenzte Innenraum, der für das Durchschieben eines zu bearbeitenden Profils zur Verfügung steht, kann vollständig ausgenutzt werden.

In Weiterbildung der Erfindung ist wenigstens eine Seitenanschlagrolle mit vertikal angeordneter Drehachse vorgesehen.

In Weiterbildung der Erfindung weist die wenigstens eine Seitenanschlagrolle eine zum Maschinenrahmen unbewegliche Drehachse auf und definiert eine vertikale Anschlagebene, die in horizontaler Richtung versetzt zur Drehachse des Drehkranzes angeordnet ist.

Durch Vorsehen einer festen Seitenanschlagrolle wird ein definierter Nullpunkt geschaffen. Durch versetzte Anordnung der durch die Seitenanschlagrolle definierten vertikalen Anschlagebene kann der innerhalb des Drehkranzes zur Verfügung stehende Raum auch für große Profile vollständig genutzt werden.

In Weiterbildung der Erfindung ist die wenigstens eine Seitenanschlagrolle in horizontaler Richtung verschiebbar.

Auf diese Weise wird die Flexibilität des erfindungsgemäßen Profilbearbeitungszentrums weiter erhöht, indem beispielsweise für Profile mit großem Querschnitt die vertikale Anschlagebene weiter gegen die Drehachse des Drehkranzes versetzt wird oder umgekehrt für kleine Profile die vertikale Anschlagebene näher an die Drehachse des Drehkranzes herangerückt wird.

In Weiterbildung der Erfindung sind die Spannrolle und/oder die Seitenanschlagrolle an einem Lagerblock drehbar gelagert, wobei der Lagerblock im Bereich des Außenumfangs der Spannrolle oder Seitenanschlagrolle wenigstens eine Auslassöffnung für Druckluft aufweist.

Auf diese Weise können bei der Bearbeitung entstehende Abfallspäne leicht und zuverlässig abgeblasen werden. Die Anordnung der Auslassöffnungen für Druckluft im Lagerblock ermöglicht es, die Auslassöffnung sehr nahe an das Werkstück heranzuführen, ohne zusätzlichen Raum in Anspruch zu nehmen.

In Weiterbildung der Erfindung sind die erste Spannrolle und die zweite Spannrolle mittels jeweils eines Schlittens auf einer horizontal verlaufenden Schiene verschiebbar angeordnet.

Indem für die erste Spannrolle und die zweite Spannrolle eine gemeinsame horizontal verlaufende Schiene genutzt wird, kann der Raumbedarf und auch der Kostenaufwand für die Spanneinrichtung niedrig gehalten werden.

In Weiterbildung der Erfindung ist die Seitenanschlagrolle mittels eines Schlittens auf der horizontal verlaufenden Schiene angeordnet.

Auf diese Weise ist eine sehr präzise Führung der Seitenanschlagrolle möglich.

In Weiterbildung der Erfindung ist die erste Spannrolle mittels eines Schlittens auf einer vertikal verlaufenden Schiene verschiebbar angeordnet, wobei die vertikal verlaufende Schiene an einem verschiebbar auf der horizontal angeordneten Schiene angeordneten Träger befestigt ist.

Auf diese Weise wird eine Verschiebung der Spannrolle in zwei Richtungen ermöglicht und dennoch kann eine höchstmögliche Präzision bei der Verschiebung und Zustellung der Spannrolle erreicht werden. Dies ist speziell deshalb sinnvoll, da die Spannrolle ja alternativ in eine vordefinierte Sollposition verfahren werden soll oder eine vordefinierte Sollspannkraft aufbringen soll.

In Weiterbildung der Erfindung ist in Durchtransportrichtung eines zu bearbeitenden Profils gesehen vor und hinter dem Drehkranz jeweils wenigstens eine horizontal und vertikal verschiebbare erste Spannrolle und jeweils wenigstens eine horizontal verschiebbare Spannrolle mit vertikal angeordneter Drehachse vorgesehen.

Ein Profil kann auf diese Weise sowohl vor als auch hinter dem Drehkranz zuverlässig gehalten werden. Vorteilhafterweise sind jeweils zwei horizontal und vertikal verschiebbare erste Spannrollen vorgesehen, wobei die beiden Spannrollen an einem sich in Durchtransportrichtung erstreckenden Träger angeordnet sind, der sich in Richtung des Drehkranzes erstreckt. Auf diese Weise können die Führungsschienen für die ersten Spannrollen so weit entfernt von der Ebene des Drehkranzes entfernt werden, dass genügend Platz für die Drehung des Drehkranzes und der auf dem Drehkranz angeordneten Bearbeitungsaggregate zur Verfügung steht. Indem eine der beiden ersten Spannrollen am freien Ende eines Trägers angeordnet ist, der sich in Richtung auf den Drehkranz erstreckt, kann ein zu bearbeitendes Profil dennoch unmittelbar vor und hinter einer Bearbeitungsstelle festgehalten werden.

In Weiterbildung der Erfindung ist in Durchtransportrichtung eines zu bearbeitenden Profils gesehen rechts und links einer Drehachse des Drehkranzes jeweils wenigstens eine horizontal und vertikal verschiebbare erste Spannrolle mit horizontal angeordneter Drehachse vorgesehen.

Auf diese Weise können die ersten Spannrollen sowohl von rechts als auch von links an das zu bearbeitende Profil herangefahren werden. Auch bei kompliziert geformten Profilen können in Verbindung mit der erfindungsgemäßen Wahlmöglichkeit, die ersten Spannrollen entweder in eine vordefinierte Sollposition zu verfahren oder mit den Spannrollen eine vordefinierte Sollspannkraft aufzubringen, auch kompliziert geformte und/oder empfindliche Profile zuverlässig für eine hochpräzise Bearbeitung gehalten werden.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine Ansicht eines erfindungsgemäßen Profilbearbeitungszentrums von der Eintransportseite eines Profils her,
- Fig. 2: eine abschnittsweise, vergrößerte Darstellung der Ansicht der Fig. 1,
- Fig. 3: eine Ansicht des Profilbearbeitungszentrums der Fig. 1 von der Austransportseite eines Profils her,
- Fig. 4: eine abschnittsweise, vergrößerte Darstellung der Ansicht der Fig. 3,
- Fig. 5: eine schematische Darstellung eines Spannvorgangs bei dem erfindungsgemäßen Profilbearbeitungszentrum bei einem Profil mit quadratischem Querschnitt,
- Fig. 6a: eine schematische Darstellung eines Spannvorgangs bei dem erfindungsgemäßen Profilbearbeitungszentrum bei einem Profil mit U-Querschnitt,
- Fig. 6b: eine schematische Darstellung eines Spannvorgangs gemäß dem Stand der Technik bei dem Profil aus Fig. 6a,
- Fig. 7a: eine schematische Darstellung eines Spannvorgangs bei dem erfindungsgemäßen Profilbearbeitungszentrum bei einem Profil mit einseitig offenem, dachförmigen Querschnitt,
- Fig. 7b: eine schematische Darstellung eines Spannvorgangs gemäß dem Stand der Technik bei dem Profil aus Fig. 7a,
- Fig. 8a: eine schematische Darstellung eines Spannvorgangs bei einem erfindungsgemäßen Profilbearbeitungszentrum bei einem Profil mit zweifach abgewinkeltem Querschnitt,
- Fig. 8b: eine schematische Darstellung eines Spannvorgangs gemäß dem Stand der Technik bei dem Profil aus Fig. 8a und
- Fig. 8c: eine zweite Darstellung eines Spannvorgangs gemäß dem Stand der Technik bei dem Profil aus Fig. 8a.

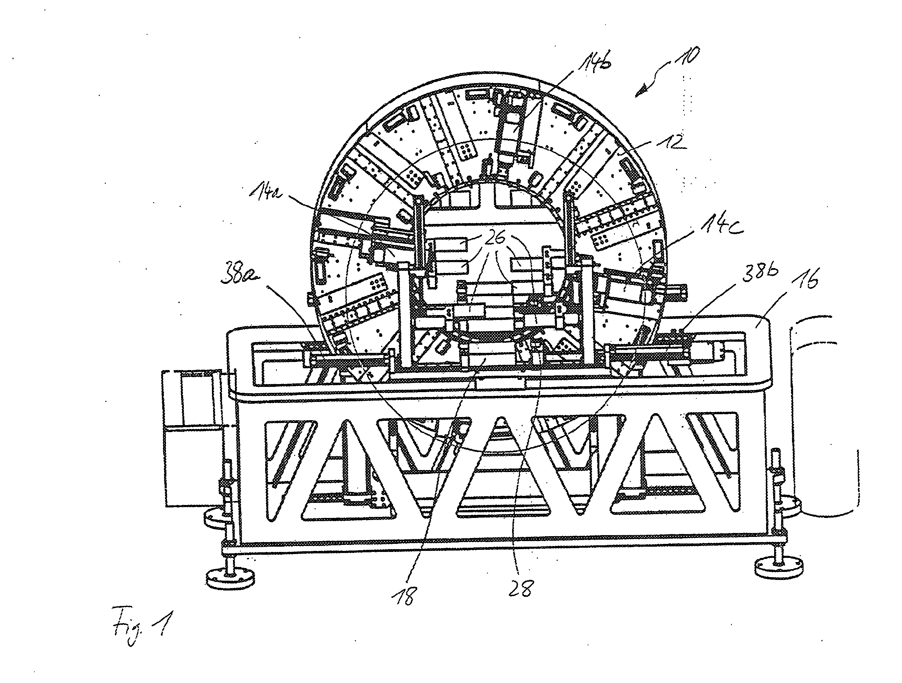

Die Darstellung der Fig. 1 zeigt ein erfindungsgemäßes Profilbearbeitungszentrum 10 mit einer Drehkranzeinheit 12 mit mehreren Bearbeitungswerkzeugen 14a, 14b, 14c. Die Bearbeitungswerkzeuge 14a, 14b, 14c sind als Motoren ausgebildet und können mit unterschiedlichen Werkzeugeinsätzen versehen sein. Als Bearbeitungseinheit auf dem Drehkranz kann beispielsweise auch eine Säge vorgesehen sein, alternativ kann eine Säge der Drehkranzeinheit 12 nachgeschaltet sein.

Die Drehkranzeinheit 12 ist drehbar an einem Maschinenrahmen 16 gelagert, der auf einem Fundament ruht. Einrichtungen zum Zuführen von Profilen zu der Drehkranzeinheit 12 und zum Abführen der bearbeiteten Profile sind der Übersichtlichkeit halber nicht dargestellt.

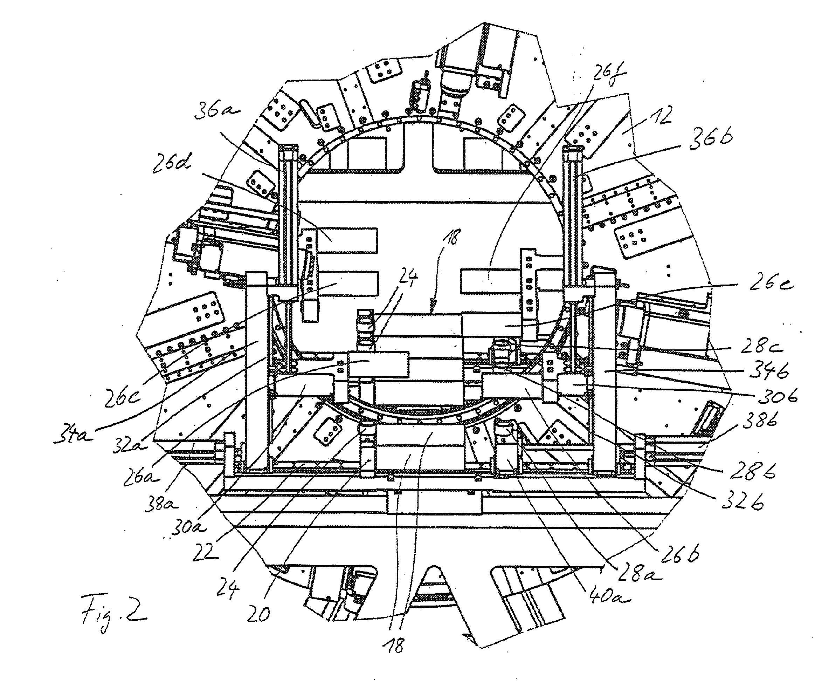

Eine Spanneinrichtung des Profilbearbeitungszentrums 10 weist, siehe die vergrößerte Ansicht der Fig. 2, insgesamt sechs Auflagerollen 18 mit horizontal angeordneter Drehachse auf. Die Drehachsen der Auflagerollen 18 sind horizontal angeordnet und relativ zum Maschinenrahmen 16 fixiert. Die in Fig. 1 und 2 im Vordergrund erkennbaren beiden Lagerrollen 18 sind aber an einem Lagerbock 20 drehbar gelagert, der wiederum schlittenförmig ausgebildet ist und auf einer horizontalen Schiene 22 verschiebbar angeordnet ist. Auf dem Lagerbock 2 ist weiter eine Seitenanschlagrolle 24 drehbar angeordnet, deren Drehachse vertikal angeordnet ist. Zusammen mit dem Lagerblock 20 sind somit die beiden in Fig. 1 und Fig. 2 vor dem Drehkranz 12 angeordneten Lagerrollen 18 in horizontaler Richtung relativ zum Maschinenrahmen 16 verschiebbar, wobei eine solche Verschiebung lediglich im Rahmen von Einstellarbeiten vorgenommen wird. Während der Bearbeitung und speziell während des Spannens eines Profils sind die Auflagerollen 18 und auch die Seitenanschlagrollen 24 relativ zum Maschinenrahmen 16 fixiert.

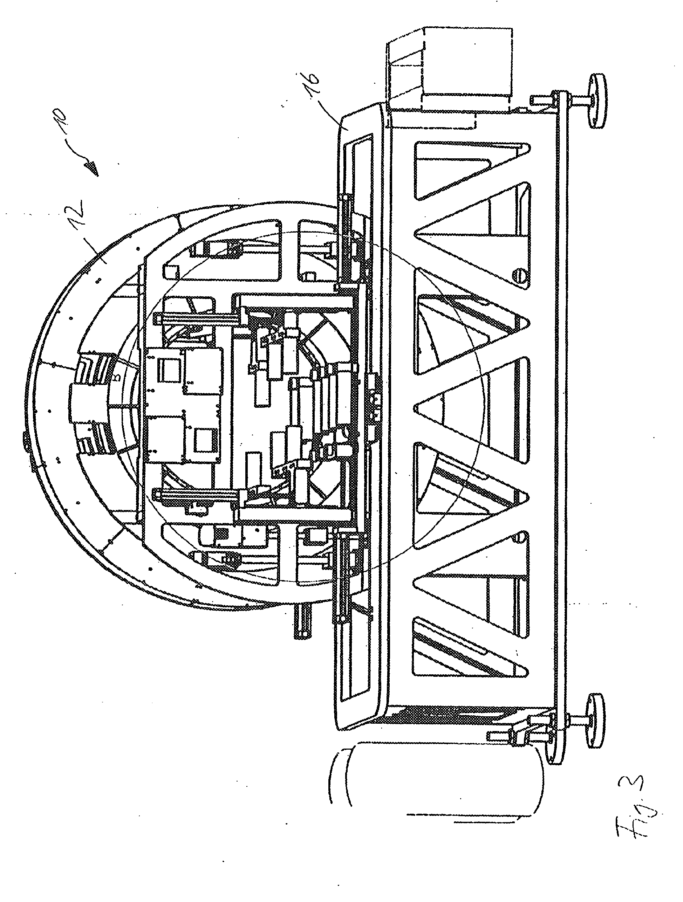

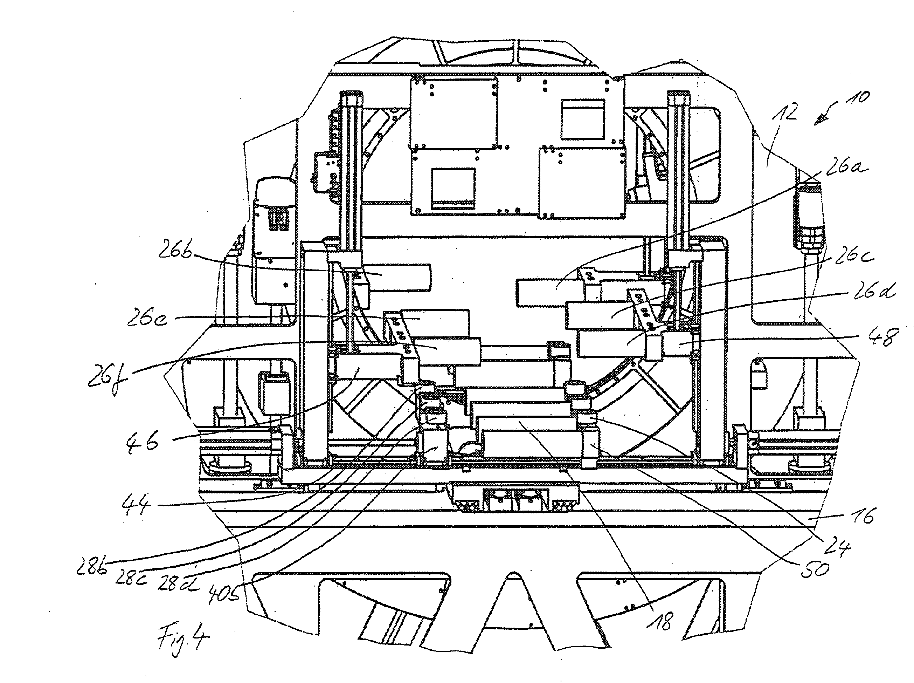

Die in der Darstellung der Fig. 1 und 2 hinter dem Drehkranz 12 angeordneten Auflagerollen 18 und Seitenanschlagrollen 24 sind ebenfalls an einem gemeinsamen Lagerbock angeordnet, der ebenfalls auf einer horizontal verlaufenden Schiene verschiebbar angeordnet ist, während der Bearbeitung und speziell während des Spannens eines Profils aber relativ zum Maschinenrahmen 16 fixiert ist, wie noch im Zusammenhang mit den Fig. 3 und 4 erläutert wird.

Neben den Auflagerollen 18 und den Seitenanschlagrollen 24 sind bei dem Profilbearbeitungszentrum 10 sechs erste Spannrollen 26a, 26b, 26c, 26d, 26e, 26f sowie vier zweite Spannrollen 28a, 28b, 28c mit vertikal angeordneten Drehachsen vorgesehen. Die ersten Spannrollen 26a bis 26f sind jeweils in horizontaler Richtung und in vertikaler Richtung verschiebbar, wobei die ersten Spannrollen 26a, 26d in der Darstellung der Fig. 1 und 2 vor dem Drehkranz 12 angeordnet sind und die ersten Spannrollen 26b, 26c, 26e und 26f hinter dem Drehkranz 12 angeordnet sind.

Die ersten Spannrollen 26a, 26d sind jeweils an einem Lagerbock 30a, 30b angeordnet, wobei die Lagerböcke, 30a, 30b jeweils an einem Schlitten befestigt sind, der entlang einer vertikal angeordneten Schiene 32a, 32b verschiebbar ist. Die Schienen 32a, 32b sind jeweils an einem in vertikaler Richtung verlaufenden Träger 34a, 34b angeordnet, wobei die Träger 34a, 34b an ihrem jeweiligen unteren Ende wiederum mit einem Schlitten verbunden sind, der entlang der horizontalen Schiene 22 verschiebbar ist. Die Lagerböcke 30a, 30b können mittels eines Verstellzylinders 36a, 36b entlang der jeweiligen vertikalen Schiene 32a, 32b verschoben werden. Die vertikalen Träger 34a, 34b können jeweils mittels eines Verstellzylinders 38a, 38b in horizontaler Richtung auf der Schiene 22 verschoben werden.

Die zweiten Spannrollen 28a, 28b, 28c, 28d sind jeweils auf einem Lagerbock 40a, 40b montiert, wobei in den Darstellungen der Fig. 1 und 2 lediglich der Lagerbock 40a für die Spannrolle 28a zu erkennen ist, der in den Fig. 1 und 2 vor dem Drehkranz 12 angeordnet ist. Der Lagerbock 40a ist mit einem Schlitten verbunden, der auf der horizontal verlaufenden Schiene 22 verschiebbar angeordnet ist. Um den Lagerbock 40a und damit die zweite Spannrolle 28a in horizontaler Richtung zu verschieben, ist ein in den Darstellungen der Fig. 1 und 2 nicht zu erkennender Verstellzylinder vorgesehen.

Ein zu bearbeitendes Profil wird auf den Auflagerollen 18 liegend auf den Drehkranz 12 zugefördert, bis sich die zu bearbeitende Stelle des Profils innerhalb des Drehkranzes 12 befindet. Um das Profil dann für die Bearbeitung zu fixieren, werden die ersten Spannrollen 26a bis 26f und die zweiten Spannrollen 28a bis 28c in Richtung auf das Profil zugestellt, um dann das Profil während der Bearbeitung zwischen den Auflagerrollen 18 und den ersten Spannrollen 26a bis 26f sowie den Seitenanschlagrollen 24 und den zweiten Spannrollen 28a bis 28d zu halten.

Erfindungsgemäß können die Verstellzylinder der ersten und zweiten Spannrollen dabei so angesteuert werden, dass entweder die ersten und zweiten Spannrollen in eine vordefinierte Sollposition verfahren werden oder die ersten und zweiten Spannrollen eine vordefinierte Sollspannkraft auf das Profil ausüben. Die hierzu erforderlichen Steuersignale werden von einer in Fig. 1 und 2 nicht dargestellten Steuereinheit ausgegeben, wobei die Steuereinheit auch zeitlich gesehen zwischen den unterschiedlichen Einstellungsmodi abwechseln kann. Beispielsweise wird ein Profil in den Bearbeitungsbereich innerhalb des Drehkranzes 12 eingeschoben und dann durch Verfahren der zweiten Spannrollen 28a bis 28d in eine definierte Sollposition zunächst in Anschlag gegen die Seitenanschlagrollen 24 gebracht. Da die Abmessungen des Profils der Steuereinheit bekannt sind, kann die definierte Sollposition der zweiten Spannrollen 28a bis 28d zunächst so eingestellt werden, dass das Profil nur in seiner Lage fixiert wird, aber noch keine nennenswerte Spannkraft auf das Profil aufgebracht wird. Dies kann sinnvoll sein, um beispielsweise das Kippen oder Wegdrehen des Profils beim Spannen zu verhindern. Nachdem das Profil nun mittels der Auflagerollen 18, der Seitenanschlagrollen 24 und der zweiten Spannrollen 28a bis 28d vorfixiert ist, werden die ersten Spannrollen 26a bis 26f gegen die Oberseite des Profils gefahren, beispielsweise so, dass die ersten Spannrollen 26a bis 26f eine vordefinierte Sollspannkraft auf das Profil aufbringen. Ein Wegdrehen oder Wegkippen des Profils durch das Aufbringen der Sollspannkraft mittels der ersten Spannrollen 26a bis 26f wird dann dadurch verhindert, dass das Profil bereits zwischen den Seitenanschlagrollen 24 und den zweiten Spannrollen 26a bis c sicher fixiert ist. Nachfolgend kann die Steuereinheit noch die Verstellzylinder der zweiten Spannrollen 28a bis 28d so beaufschlagen, dass auch die zweiten Spannrollen 28a bis 28d eine vordefinierte Sollspannkraft auf das Profil aufbringen und dadurch das Profil unverrückbar für die Bearbeitung durch die Bearbeitungswerkzeuge 14a, 14b, 14c an dem Drehkranz 12 festhalten. Wesentlich ist, dass die ersten Spannrollen 26a bis 26f und die zweiten Spannrollen 28a bis 28d jeweils mittels der Steuereinheit und den jeweils zugeordneten Verstellzylindern so verfahren werden können, dass sie entweder in eine vordefinierte Sollposition verfahren werden oder eine vordefinierte Sollspannkraft auf das Profil aufbringen, wobei das Verfahren in eine vordefinierte Sollposition während eines einzigen Spannvorganges vor oder nach dem Aufbringen einer vordefinierten Sollspannkraft erfolgen kann. Mit konventionellen Profilbearbeitungszentren schwierig oder nur unter Verwendung speziell angepasster Formstücke spannbare Profile können dadurch zuverlässig und voll automatisch eingespannt werden.

Anhand der Darstellungen der Fig. 1 und 2 ist zu erkennen, dass die Auflagerollen 18 eine Auflageebene unterhalb des Drehkranzes 12 des Profilbearbeitungszentrums 10 definieren. Der freie Raum innerhalb des Drehkranzes 12, der ja die Maximalabmessungen eines zu bearbeitenden Profiles definiert, kann dadurch weitestgehend genutzt werden.

Die Lagerböcke für die ersten Spannrollen 26a bis 26f und die Lagerböcke 40a, 40b für die zweiten Spannrollen 28a bis 28d sind mit Auslassöffnungen für Druckluft versehen, um bei der Bearbeitung anfallende Späne von dem bearbeiteten Profil abblasen zu können. Die Austrittsöffnungen sind in den Lagerböcken dabei so angeordnet, dass die Druckluft etwa axial zu den ersten Spannrollen 26a bis 26f und den zweiten Spannrollen 28a bis 28d austritt. Indem die Auslassöffnungen in den Lagerböcken angeordnet sind, wird kein zusätzlicher Platz für das Verlegen von Druckluftschläuchen oder dergleichen benötigt. In gleicher Weise können die Lagerböcke 20 für die Auflagerollen 18 und die Seitenanschlagrollen 24 mit Druckluftauslassöffnungen versehen sein.

Die Darstellung der Fig. 3 zeigt das Profilbearbeitungszentrum 10 der Fig. 1 von hinten, also von der Austransportseite eines Profils. Ein zu bearbeitendes Profil wird demnach in der Darstellung der Fig. 1 in die Zeichenebene hinein und durch den Drehkranz 12 hindurchgeschoben, in der Zeichenebene der Fig. 3 also aus der Zeichenebene heraus.

Anhand der Fig. 3 und 4 ist zu erkennen, dass in Bewegungsrichtung eines zu bearbeitenden Profils durch den Drehkranz 12 hindurch vor dem Drehkranz 12 zwei erste Spannrollen 26a, 26b und hinter dem Drehkranz 12 vier erste Spannrollen 26c, 26d, 26e und 26f angeordnet sind. Die Drehachsen der erste Spannrollen 26a bis 26f sind jeweils horizontal angeordnet und die ersten Spannrollen 26a bis 26f sind jeweils sowohl in horizontaler als auch in vertikaler Richtung verschiebbar. Die in Durchtransportrichtung eines Profils durch den Drehkranz 12 hinter dem Drehkranz 12 angeordneten ersten Spannrollen 26e, 26f, 26c, 26d sind in gleicher Weise wie die ersten Spannrollen 26a, 26b an einem Lagerbock montiert, der wiederum an einer vertikalen Schiene verschiebbar angeordnet ist. Die vertikale Schiene ist an einem vertikalen Träger angeordnet, der dann wiederum mittels eines Schlittens auf einer gemeinsamen horizontalen Schiene 44 verschiebbar angeordnet ist. Grundsätzlich ist die Anordnung zur horizontalen und vertikalen Verschiebung der ersten Spannrollen 26e, 26f, 26c, 26d gleich wie bereits anhand der Fig. 1 und 2 und der Spannrollen 26a, 26b erläutert wurde, so dass auf eine erneute Erörterung verzichtet wird.

Jeweils zwei erste Spannrollen 26e, 26f sowie 26c, 26d sind an einem gemeinsamen Lagerbock 46, 48 angeordnet. Die Lagerböcke 46, 48 weisen eine L-artige Form auf, wobei sich ein freier Schenkel in Richtung auf den Drehkranz 12 zu erstreckt und horizontal angeordnet ist. Im Bereich des Endes dieses freien Schenkels ist jeweils eine erste Spannrolle 26e bzw. 26c angeordnet. Diese Spannrollen 26e, 26c können ein zu bearbeitendes Profil dadurch sehr nahe an der Bearbeitungsstelle spannen, um eine hochpräzise Bearbeitung zu ermöglichen.

Wie in der Darstellung der Fig. 4 zu erkennen ist, sind vier Auflagerollen 18 in Durchtransportrichtung eines zu bearbeitenden Profils hinter dem Drehkranz 12 angeordnet und diese vier Auflagerrollen 18 sind gemeinsam mit drei Seitenanschlagrollen 24 an einem gemeinsamen Lagerbock 50 angeordnet. Der Lagerbock 50 ist auf der gemeinsamen horizontalen Schiene 44 verschiebbar angeordnet, wobei eine Verschiebung des Lagerbocks 50 und damit der Auflagerollen 18 und der Seitenanschlagrollen 24 nur im Rahmen von Einstellarbeiten, nicht aber während eines Spannvorgangs erfolgt.

Anhand der Darstellung der Fig. 4 ist zu erkennen, dass insgesamt vier Seitenanschlagrollen 24 vorgesehen sind, denen insgesamt vier, siehe auch Fig. 2, zweite Spannrollen 28a, 28b, 28c und 28d gegenüber liegen. Ein zu bearbeitendes Profil wird beim Spannen dadurch in horizontaler Richtung symmetrisch belastet.

Den insgesamt sechs Auflagerollen 18 liegen in vertikaler Richtung gesehen insgesamt sechs erste Spannrollen 26a bis 26f gegenüber. Die zweiten Spannrollen 26a bis 26f sind dabei so angeordnet, dass jede erste Spannrolle 26a bis 26f in vertikaler Richtung einer der Auflagerolle 18 gegenüberliegt. Dadurch werden auch in vertikaler Richtung symmetrische Einspannverhältnisse sichergestellt.

In Durchtransportrichtung eines zu bearbeitenden Profils durch den Drehkranz 12 sind die ersten Spannrollen 26c, 26d, 26e und 26f so angeordnet, dass die erste Spannrolle 26e zwischen den beiden Spannrollen 26c, 26d angeordnet ist und die erste Spannrolle 26f dann hinter der ersten Spannrolle 26d angeordnet ist. Wenn also alle sechs Spannrollen 26a bis 26f oben auf der Oberseite eines Profils aufliegen, so wird das Profil in Durchtransportrichtung gesehen abwechselnd von einer rechts und einer links gelagerten ersten Spannrolle 26a bis 26f gehalten. Sollten sich durch die einseitige, fliegende Lagerung der ersten Spannrollen 26a bis 26f leicht unsymmetrische Spannungsverhältnisse ergeben, so werden diese durch die beschriebene abwechselnde, nach Art eines Reißverschlusses ineinandergreifende Anordnung der ersten Spannrollen 26a bis 26f wieder aufgehoben.

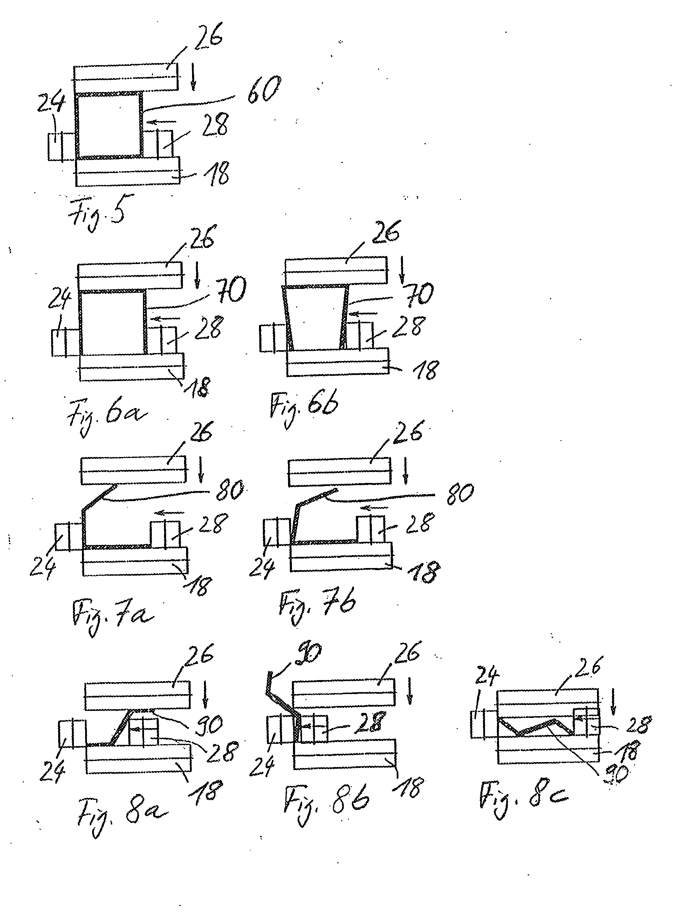

Anhand der Darstellung der Fig. 5 bis 8c soll das Spannen von Profilen bei dem erfindungsgemäßen Profilbearbeitungszentrum im Vergleich zum Stand der Technik näher erläutert werden.

In der Darstellung der Fig. 5 ist ein einzuspannendes Profil 60 zu erkennen, das auf den Auflagerrollen 18 aufliegt und das zwischen der Seitenanschlagrolle 24 und der in Richtung auf das Profil 60 zu und von diesem weg verschiebbaren zweiten Spannrolle 28 eingespannt werden soll. Zusätzlich kann noch von oben her die erste Spannrolle 26 auf das Profil 60 zu und von diesem weg bewegt werden. Die beiden beweglichen Spannrollen 26, 28 sind jeweils mit einem nicht dargestellten Aktor versehen, der einen Spannkraftsensor und einen Positionssensor aufweist, wobei die Aktoren, wie bereits ausgeführt, über eine Steuereinheit angesteuert werden.

Das Profil 60 weist einen quadratischen Querschnitt auf und ist in Bezug auf die Spannkraft, die von den Rollen 18, 24, 26, 28 auf das Profil 60 ausgeübt wird, unkritisch. Sinnvollerweise wird die Steuereinheit aber zunächst die zweite Spannrolle 28 auf das Profil 60 zu bewegen, bis dieses mit seiner Rückseite an der Seitenanschlagrolle 24 anliegt. Daraufhin wird die erste Spannrolle 26 zugestellt, um das Profil 60 auf die Auflagerolle 18 zu drücken. Gleichzeitig oder nachfolgend können die Aktoren der beweglichen Spannrollen 26, 28 so geregelt werden, dass sie eine vorgesehene Sollspannkraft erreichen.

In der Darstellung der Fig. 6a ist schematisch das Einspannen eines U-förmigen Profils 70 dargestellt, das mit seiner offenen Seite auf den Auflagerollen 18 aufliegt. Mittels der Erfindung wird zum Spannen eines solchen Profils 70, das ersichtlich leicht verformt werden kann, zunächst die zweite Spannrolle 28 mittels der Steuereinheit in eine vordefinierte Sollposition verfahren. In dieser Sollposition sorgt die zweite Spannrolle 28 dafür, dass die gegenüberliegende Seite des U-Profils 70 an der Seitenanschlagrolle 24 anliegt. Da die Steuereinheit die Abmessungen des Profils 70 kennt und die Seitenanschlagrolle 24 und die Auflagerolle 18 eine Nulllage definieren, kann die Steuereinheit die Sollposition bestimmen. Es ist dabei aber wesentlich, dass die zweite Spannrolle 28 in einer Lageregelung verfahren wird, da keine allzu große Kraft auf das U-Profil 70 ausgeübt werden darf. Sobald sich das U-Profil 70 in der in Fig. 6a dargestellten Position befindet, bewegt die Steuereinheit die erste Spannrolle 26 auf das Profil 70 zu, bis eine vordefinierte Sollspannkraft erreicht ist. Die erste Spannrolle 26 wird dabei mittels einer Spannkraftregelung betrieben, da das U-Profil 70 gegenüber einer Belastung von oben unempfindlich ist und keine größeren Verformungen zu befürchten sind. Das U-Profil 70 wird somit über die zweite Spannrolle 28 in die vorgesehene Lage gebracht, aber erst durch die erste Spannrolle 26 so fixiert, dass es bearbeitet werden kann. Nachdem die erste Spannrolle 26 das U-Profil 70 fixiert hat, kann, falls erforderlich, die zweite Spannrolle 28 noch über eine Regelung der Spannkraft in Richtung auf das U-Profil 70 zu bewegt werden, um auch mittels der zweiten Spannrolle 28 eine Sollspannkraft aufzubringen. Solange die erste Spannrolle 26 das U-Profil 70 gegen die Auflagerolle 18 drückt, kann auch mittels der zweiten Spannrolle 28 eine höhere Spannkraft auf das U-Profil 70 aufgebracht werden, ohne dass Verformungen zu befürchten sind, als wenn die erste Spannrolle 26 das U-Profil 70 nicht gegen die Auflagerolle 18 drücken würde.

In der Fig. 6b ist das Spannen des U-Profils 70 nach dem Stand der Technik dargestellt. Beide Spannrollen 26, 28 würden in diesem Fall ausschließlich mit einer Spannkraftreglung auf das U-Profil 70 zugestellt werden. Als logische Folge würde das U-Profil 70 an den freien Enden seiner Schenkel zusammengedrückt und könnte nicht mehr bearbeitet werden. Im Stand der Technik wurde zur Vermeidung solcher Probleme beispielsweise ein Zwischenstück eingesetzt, das in das U-Profil 70 eingesetzt wurde, um dessen Verformung zu verhindern.

Die Darstellung der Fig. 7a zeigt schematisch das Spannen eines weiteren, einseitig offenen Profils 80. Der Querschnitt des Profils 80 kann als etwa hausförmig beschrieben werden, wobei eine Seitenwand des Hauses sowie eine Dachschräge des Satteldachs weggelassen ist. Das Profil 80 ist ersichtlich gegenüber einer Belastung von oben extrem verformungsempfindlich.

Bei dem erfindungsgemäßen Profilbearbeitungszentrum wird beim Spannen des Profils 80 zunächst die zweite Spannrolle 28 in Richtung auf das Profil 80 zu verfahren, um das Profil 80 zwischen der zweiten Spannrolle 28 und der Seitenanschlagrolle 24 zu fixieren. Die zweite Spannrolle 28 kann dabei entweder mittels Lageregelung oder Spannkraftregelung betrieben werden, da das Profil 80 gegenüber einer Belastung durch die zweite Spannrolle 28 vergleichsweise unempfindlich ist. Beispielsweise wird mittels der zweiten Spannrolle 28 das Profil 80 mit einer vordefinierten Sollspannkraft eingespannt. Nachfolgend wird die erste Spannrolle 26 in Richtung auf das Profil 80 zu bewegt, wobei die erste Spannrolle 26 in der Lageregelung in eine vordefinierte Sollposition verfahren wird. Diese Sollposition ist so gewählt, dass die erste Spannrolle 26 nur leicht auf den freien Schenkel des Profils 80 drückt und dieses dadurch zusätzlich fixiert. Dadurch, dass die erste Spannrolle 26 mittels einer Positionsregelung verfahren wird, ist nicht zu befürchten, dass das Profil 80 durch Unzulänglichkeiten bei der Spannkraftregelung oder auch durch Stick-Shift-Effekte des Aktors verformt wird.

Die Darstellung der Fig. 7b zeigt schematisch das Spannen des Profils 38 gemäß dem Stand der Technik. Die erste Spannrolle 26 wird gemäß dem Stand der Technik in einer Spannkraftregelung auf das Profil 80 zu verfahren. Stick-Shift-Effekte, beispielsweise verursacht durch ein vergleichsweise hohes Losbrechmoment des Aktors der ersten Spannrolle 26, führen dazu, dass die erste Spannrolle 26 von oben auf das Profil 80 drückt und dieses dadurch in unzulässiger Weise verformt.

Die Darstellung der Fig. 8a zeigt das Spannen eines weiteren Profils 90 bei dem erfindungsgemäßen Profilbearbeitungszentrum. Das Profil 90 weist zwei parallel zueinander angeordnete Leisten auf, die mittels einer Schräge miteinander verbunden sind. Das Profil 90 ist dadurch sehr schwierig einzuspannen, da es alleine durch die Schwerkraft umkippen wird und dadurch, siehe Fig. 8c, in einer Lage angeordnet wäre, in der keine der Profilflächen 90 parallel zu den Rollen 18, 24, 26, 28 angeordnet wäre. Eine präzise Bearbeitung wäre in der umgekippten Stellung gemäß Fig. 8c nicht zu bewerkstelligen.

Bei der Erfindung, siehe Fig. 8a, wird daher zunächst die zweite Spannrolle 28 in einer Lageregelung bis in eine vorgesehene Sollposition auf das Profil 90 zu verfahren. In dieser Sollposition liegt das Profil 90 einerseits mit seiner Rückseite an der Seitenanschlagrolle 24 an und wird mittels der zweiten Spannrolle 28, die an der Schräge des Profils 90 angreift, zuverlässig in seiner aufrechten Stellung gehalten. Da die zweite Spannrolle 28 in eine Sollposition verfahren wurde, ist nicht zu befürchten, dass die zweite Spannrolle 28 das Profil 90 hoch drückt, so dass dessen in der Fig. 8a linker Randstreifen nicht mehr horizontal auf der Auflagerolle 18 aufliegt. Nachdem die zweite Spannrolle 28 in ihre Sollposition verfahren wurde, kann die erste Spannrolle 26 auf das Profil 90 zu gestellt werden. Auch die erste Spannrolle 26 wird dabei mittels einer Lageregelung in eine vorgesehene Sollposition verfahren, so dass das Profil 90 nicht durch eine übermäßige Spannkraft der ersten Spannrolle 26 verformt wird.

Anhand des Spannvorgangs des Profils 90 ist gut zu erkennen, dass es die Erfindung ermöglicht, bisher auch nur mit großem Aufwand zuverlässig einzuspannende Profile ohne zusätzliche Beilagen oder sonstige Maßnahmen einzuspannen.

Die Darstellung der Fig. 8b zeigt die Probleme, die beim Einspannen des Profils 90 gemäß dem Stand der Technik auftreten. Gemäß Fig. 8b wurde zunächst die zweite Spannrolle 28 bis zum Erreichen einer vorgegebenen Spannkraft auf das Profil 90 zugestellt. Dies führt dazu, dass das Profil 90 hoch gedrückt wird und nach dem Zustellen der ersten Spannrolle 26 außerhalb des Bearbeitungsbereichs zu liegen kommt.

Gemäß Fig. 8c wurde zunächst die erste Spannrolle 26 bis zu einer vorgegebenen Spannkraft auf das Profil 90 zu gestellt. Dies führt zunächst dazu, dass das Profil 90 umkippt und so auf der Auflagerolle 18 zu liegen kommt, dass keine seiner Flächen mehr parallel zu der Auflagerolle 18 ist. Die zweite Spannrolle 28 kann nun zwar zu gestellt werden, eine sinnvolle Bearbeitung des Profils 90 ist in dieser gekippten Lage aber nicht mehr möglich.

Insgesamt wird durch das erfindungsgemäße Profilbearbeitungszentrum 10 eine Möglichkeit geschaffen, auch sehr große Profile in äußerst flexibler Weise und dabei äußerste präzise zu bearbeiten. Dies wird durch die erfindungsgemaße Kombination der Drehkranzeinheit 12 mit einer Spanneinrichtung erreicht, bei der sowohl Spannrollen mit horizontaler als auch vertikaler Drehachse vorgesehen sind und bei der die Spannrollen wahlweise in eine vordefinierte Sollposition verfahren werden können oder eine definierte Sollspannkraft auf ein zu bearbeitendes Profil aufbringen können.

## Patentansprüche

1. Profilbearbeitungszentrum mit einer Drehkranzeinheit (12) mit mehreren Bearbeitungswerkzeugen (14a, 14b, 14c) und wenigstens einer Spanneinrichtung zum Spannen von Profilen, wobei ein zu bearbeitendes Profil zur Bearbeitung innerhalb des Drehkranzes (12) angeordnet und mittels der Spanneinrichtung fixiert werden kann, wobei die Spanneinrichtung wenigstens eine Auflagerolle (18) mit horizontal angeordneter, relativ zum Maschinenrahmen (16) fixierter Drehachse aufweist, **dadurch gekennzeichnet, dass** die Spanneinrichtung wenigstens eine erste Spannrolle (26a bis 26f) mit horizontal angeordneter Drehachse und wenigstens eine zweite Spannrolle (28a bis 28d) mit vertikal angeordneter Drehachse aufweist, wobei die erste Spannrolle (26a bis 26f) relativ zum Maschinenrahmen (16) sowohl in horizontaler als auch in vertikaler Richtung verschiebbar ist und die zweite Spannrolle (28a bis 28d) relativ zum Maschinenrahmen (16) wenigstens in horizontaler Richtung verschiebbar ist und wobei die Spanneinrichtung eine Steuereinheit aufweist, wobei die Steuereinheit Mittel aufweist, um die erste und/oder die zweite Spannrolle (26a bis 26f, 28a bis 28d) wahlweise in eine vordefinierte Sollposition zu verfahren und wobei die Steuereinheit Mittel aufweist, um wahlweise mittels der ersten und/oder der zweiten Spannrolle eine vordefinierte Sollspannkraft auf ein zu bearbeitendes Profil aufzubringen.

2. Profilbearbeitungszentrum nach Anspruch 1, **dadurch gekennzeichnet, dass** die Auflagerollen (18) eine Auflageebene unterhalb einer Drehachse des Drehkranzes (12) definieren.

3. Profilbearbeitungszentrum nach Anspruch 1 oder 2, **dadurch gekennzeichnet, dass** wenigstens eine Seitenanschlagrolle (24) mit vertikal angeordneter Drehachse vorgesehen ist.

4. Profilbearbeitungszentrum nach Anspruch 3, **dadurch gekennzeichnet, dass** die wenigstens eine Seitenanschlagrolle (24) eine relativ zum Maschinenrahmen (16) fixierte Drehachse aufweist und eine vertikale Anschlagebene definiert, die in horizontaler Richtung versetzt zur Drehachse des Drehkranzes (12) angeordnet ist.

5. Profilbearbeitungszentrum nach Anspruch 3, **dadurch gekennzeichnet, dass** die wenigstens eine Seitenanschlagrolle (24) in horizontaler Richtung verschiebbar ist.

6. Profilbearbeitungszentrum nach einem der vorstehenden Ansprüche, **dadurch gekennzeichnet, dass** die Spannrolle (26a bis 26f, 28a bis 28d), die Auflagerolle (18) und/oder die Seitenanschlagrolle (24) an einem Lagerblock (30a, 30b, 40a, 40b) drehbar gelagert ist, wobei der Lagerblock im Bereich des Außenumfangs der Spannrolle (26a bis 26f, 28a bis 28d), Auflagerolle (18) und/oder Seitenanschlagrolle (24) wenigstens eine Auslassöffnung für Druckluft aufweist.

7. Profilbearbeitungszentrum nach wenigstens einem der vorstehenden Ansprüche, **dadurch gekennzeichnet, dass** die erste Spannrolle (26a bis 26f) und die zweite Spannrolle (28a bis 28d) mittels jeweils eines Schlittens auf einer horizontal verlaufende Schiene (22, 44) verschiebbar angeordnet sind.

8. Profilbearbeitungszentrum nach Anspruch 7, **dadurch gekennzeichnet, dass** die Seitenanschlagrolle (24) und/oder die Auflagerolle (18) mittels eines Schlittens auf der horizontal verlaufenden Schiene angeordnet ist.

9. Profilbearbeitungszentrum nach Anspruch 7 oder 8, **dadurch gekennzeichnet, dass** die erste Spannrolle (26a bis 26f) mittels eines Schlittens auf einer vertikal verlaufenden Schiene (32a, 32b) verschiebbar angeordnet ist, wobei die vertikal verlaufende Schiene (32a, 32b) an einem verschiebbar auf der horizontal angeordneten Schiene (22, 44) angeordneten Träger (34a, 34b) befestigt ist.

10. Profilbearbeitungszentrum nach wenigstens einem der vorstehenden Ansprüche, **dadurch gekennzeichnet, dass** in Durchtransportrichtung eines zu bearbeitenden Profils gesehen vor und hinter dem Drehkranz (12) jeweils wenigstens eine horizontal und vertikal verschiebbare erste Spannrolle (26a bis 26f) und jeweils wenigstens eine horizontal verschiebbare zweite Spannrolle (28a bis 28d) mit vertikal angeordneter Drehachse vorgesehen ist.

11. Profilbearbeitungszentrum nach einem der vorstehenden Ansprüche, **dadurch gekennzeichnet, dass** in Durchtransportrichtung eines zu bearbeitenden Profils gesehen rechts und links einer Drehachse des Drehkranzes (12) jeweils wenigstens eine horizontal und vertikal verschiebbare erste Spannrolle (26a bis 26f) mit horizontal angeordneter Drehachse vorgesehen ist.

## Claims

1. Profile processing centre with a slewing ring unit (12) with multiple machining tools (14a, 14b, 14c) and at least one clamping device for clamping profiles, whereby a profile that is to be machined is arranged inside the slewing ring (12) and is fixed in place by means of the clamping device, whereby the clamping device comprises at least one supporting roller (18) with an axis of rotation aligned horizontally with respect to the machine frame (16), **characterised in that** the clamping device incorporates at least one first clamping roller (26a to 26f) with horizontally aligned axis of rotation and at least one second clamping roller (28a to 28d) with vertically aligned axis of rotation, whereby the first clamping roller (26a to 26f) can be moved relative to the machine frame (16) both in a horizontal and in a vertical direction, and that the second clamping roller (28a to 28d) can be moved relative to the machine frame (16) at least in a horizontal direction, and whereby the clamping device incorporates a control unit, whereby the control unit incorporates a means of moving the first and/or the second clamping roller (26a to 26f, 28a to 28d) optionally into a predefined set position, and whereby the control unit incorporates a means of optionally applying a predefined set clamping force to a profile that is to be machined by means of the first and/or the second clamping roller.

2. Profile processing centre according to Claim 1, **characterised in that** the support rollers (18) define a support plane underneath an axis of rotation of the slewing ring (12).

3. Profile processing centre according to Claim 1 or 2, **characterised in that** at least one lateral stop roller (24) with a vertically aligned axis of rotation is provided.

4. Profile processing centre according to Claim 3, **characterised in that** the minimum of one side stop roller (24) has an axis of rotation that is fixed with respect to the machine frame (16), and defines a vertical stop plane that is offset in a horizontal direction with respect to the axis of rotation of the slewing ring (12).

5. Profile processing centre according to Claim 3, **characterised in that** the minimum of one side stop roller (24) can be moved in a horizontal direction.

6. Profile processing centre according to one of the foregoing claims, **characterised in that** the clamping roller (26a to 26f, 28a to 28d), the support roller (18) and/or the side stop roller (24) are mounted rotatably on a bearing block (30a, 30b, 40a, 40b), whereby the bearing block incorporates at least one outlet opening for compressed air in the region of the outer circumference of the clamping roller (26a to 26f, 28a to 28d), the support roller (18) and/or the side stop roller (24).

7. Profile processing centre according to at least one of the foregoing claims, **characterised in that** the first clamping roller (26a to 26f) and the second clamping roller (28a to 28d) are arranged such that each can be moved by means of a carriage on a horizontally arranged rail (22, 44).

8. Profile processing centre according to Claim 7, **characterised in that** the side stop roller (24) and/or the support roller (18) are arranged by means of a carriage on the horizontally aligned rail.

9. Profile processing centre according to Claim 7 or 8, **characterised in that** the first clamping roller (26a to 26f) is arranged such that it can move by means of a carriage on a vertically aligned rail (32a, 32b), whereby the vertically aligned rail (32a, 32b) is fastened to a carrier (34a, 34b) that is arranged movably on the horizontally aligned rail (22, 44).

10. Profile processing centre according to at least one of the foregoing claims, **characterised in that** in front of and behind the slewing ring (12), as seen in the direction in which a profile that is to be processed moves through the equipment, there is in each case at least one first horizontally and vertically movable clamping roller (26a to 26f) and at least one second horizontally movable clamping roller (28a to 28d) with a vertically aligned axis of rotation.

11. Profile processing centre according to one of the foregoing claims, **characterised in that** to the left and to the right of an axis of rotation of the slewing ring (12), as seen in the direction in which a profile that is to be processed moves through the equipment, there is in each case at least one horizontally and vertically movable clamping roller (26a to 26f) with a horizontally aligned axis of rotation.

## Revendications

1. Centre de traitement de profilés doté d'une couronne d'orientation (12) avec plusieurs outils de traitement (14a, 14b, 14c) et au moins un dispositif de serrage permettant de serrer des profilés, sachant qu'un profilé à traiter est, pour le traitement, disposé dans la couronne d'orientation (12) et peut être fixé au moyen du dispositif de serrage, que le dispositif de serrage présente au moins un rouleau support (18) avec un axe de rotation disposé à l'horizontale et fixé par rapport au bâti (16) de la machine, **caractérisé en ce que** le dispositif de serrage présente au moins un premier rouleau de serrage (26a à 26f) avec un axe de rotation disposé horizontalement et au moins un deuxième rouleau de serrage (28a à 28d) avec un axe de rotation disposé verticalement, sachant que le premier rouleau de serrage (26a à 26f) peut être déplacé par rapport au bâti de la machine (16) aussi bien dans le sens horizontal que vertical et que le deuxième rouleau de serrage (28a à 28d) peut être déplacé par rapport au bâti de la machine (16) au moins dans le sens horizontal, et sachant que le dispositif de serrage présente une unité de commande, que l'unité de commande présente des moyens pour positionner au choix le premier et/ou le deuxième rouleau de serrage (26a à 26f, 28a à 28d) dans une position prédéfinie, et que l'unité de commande présente des moyens pour appliquer une force de tension prédéfinie sur un profilé à traiter, au choix au moyen du premier et/ou du deuxième rouleau de serrage.

2. Centre de traitement de profilés selon la revendication 1, **caractérisé en ce que** les rouleaux support (18) définissent un plan de support (18) au-dessous d'un axe de rotation de la couronne d'orientation (12).

3. Centre de traitement de profilés selon la revendication 1 ou 2, **caractérisé en ce qu'**est prévu au moins un rouleau de butée latérale (24) avec un axe de rotation disposé verticalement.

4. Centre de traitement de profilés selon la revendication 3, **caractérisé en ce que** l'au moins un rouleau de butée latérale (24) présente un axe de rotation fixé par rapport au bâti de la machine (16) et définit un plan de butée vertical qui est disposé de manière décalée dans le sens horizontal par rapport à l'axe de rotation de la couronne d'orientation (12).

5. Centre de traitement de profilés selon la revendication 3, **caractérisé en ce que** l'au moins un rouleau de butée latérale (24) peut être déplacé dans le sens horizontal.

6. Centre de traitement de profilés selon l'une des revendications précédentes, **caractérisé en ce que** le rouleau de serrage (26a à 26f, 28a à 28d), le rouleau support (18) et/ou le rouleau de butée latérale (24) sont montés de manière rotative sur un bloc palier (30a, 30b, 40a, 40b), sachant que le bloc palier présente au moins un orifice d'évacuation pour l'air comprimé dans la zone du pourtour extérieur du rouleau de serrage (26a à 26f, 28a à 28d), du rouleau support (18) et/ou du rouleau de butée latérale (24).

7. Centre de traitement de profilés selon au moins l'une des revendications précédentes, **caractérisé en ce que** le premier rouleau de serrage (26a à 26f) et le deuxième rouleau de serrage (28a à 28d) sont disposés de manière à pouvoir se déplacer au moyen de respectivement un chariot sur un rail (22, 44) s'étendant horizontalement.

8. Centre de traitement de profilés selon la revendication 7, **caractérisé en ce que** le rouleau de butée latérale (24) et/ou le rouleau support (18) sont disposés au moyen d'un chariot sur le rail s'étendant horizontalement.

9. Centre de traitement de profilés selon la revendication 7 ou 8, **caractérisé en ce que** le premier rouleau de serrage (26a à 26f) est disposé de manière à pouvoir être déplacé au moyen d'un chariot sur un rail s'étendant verticalement (32a, 32b), sachant que le rail s'étendant verticalement (32a, 32b) est fixé sur un support (34a, 34b) disposé de manière à pouvoir être déplacé sur le rail disposé horizontalement (22, 44).

10. Centre de traitement de profilés selon au moins l'une des revendications précédentes, **caractérisé en ce que**, vu dans le sens de transport d'un profilé à traiter, sont prévus devant et derrière la couronne d'orientation (12) respectivement au moins un premier rouleau de serrage (26a à 26f) pouvant être déplacé verticalement et horizontalement, et respectivement au moins un deuxième rouleau de serrage (28a bis 28d) pouvant être déplacé horizontalement et dont l'axe de rotation est disposé verticalement.

11. Centre de traitement de profilés selon l'une des revendications précédentes, **caractérisé en ce que**, vu dans le sens de transport d'un profilé à traiter, sont prévus à droite et à gauche d'un axe de rotation de la couronne d'orientation (12) respectivement au moins un premier rouleau de serrage (26a à 26f) pouvant être déplacé verticalement et horizontalement et dont l'axe de rotation est disposé horizontalement.
